# FASCICULE DE BREVET EUROPEEN

(11) **EP 2 549 860 B1**
(45) Date de publication et mention de la délivrance du brevet: **19.10.2016**
(21) Numéro de dépôt: 11715961.6
(22) Date de dépôt: 22.03.2011
(51) Int. Cl.: A01K 85/00

(54) **LEURRE DE PÊCHE**
ANGELKÖDER
FISHING LURE

(30) Priorité: 22.03.2010 FR 1001115
(43) Date de publication de la demande: 30.01.2013
(73) Titulaire: Fiiish, 29200 Brest (FR)
(72) Inventeur: GUENNAL, Matthieu, F-29720 Ploneour Lanvern (FR)
(74) Mandataire: Ipside
(86) Numéro de dépôt international: PCT/FR2011/050586
(87) Numéro de publication internationale: WO 2011/117529

(56) Documents cités:
- DE-U1-202008 005 783
- JP-A- 2001 258 426
- JP-A- 2004 166 521
- US-A1- 2003 159 331

## Description

La présente invention se rapporte aux leurres de pêche servant d'appât aux poissons pour la pêche à la ligne.

Plus particulièrement, elle concerne un leurre de pêche comportant une tête rigide présentant une face arrière, un corps en matière souple s'étendant longitudinalement entre une extrémité avant et une extrémité arrière, l'extrémité avant étant adaptée à venir en contact avec la face arrière, de sorte à former un leurre présentant la forme d'un appât pour poisson, un hameçon s'étendant entre une première extrémité comportant un oeillet et une deuxième extrémité comportant une pointe.

Il est connu du document US 4 791 749 un leurre de pêche du type décrit précédemment, comportant une tête en plomb au travers de laquelle est inséré un câble rigide. L'extrémité du câble rigide présente une forme recourbée adaptée à recevoir l'oeillet d'un hameçon. La tête en plomb comporte deux saillies en retour permettant de maintenir la tête en place dans le corps. Grâce à ces dispositions, l'hameçon est amovible et le leurre peut recevoir des hameçons de différentes tailles, débouchant à différents endroits du corps en plastique.

Il est connu du document US2007/0175083 un leurre comportant une tête en plomb sur laquelle est monté un hameçon. La hampe de l'hameçon comporte des parties en saillie qui s'engagent dans les parties du corps en plastique pour maintenir l'hameçon dans ce dernier.

Il est connu du document US2003/01 59331 un leurre comportant une tête en plomb sur laquelle est monté un corps souple. La pointe d'un hameçon maintient le corps souple et l'oeillet de l'hameçon est maintenu au leurre par une tige d'attache. L'oeillet de l'hameçon est fixé à la ligne de pêche.

Bien que les leurres précédemment décrits soient réalisés en deux parties et présentent des moyens pour relier le corps à la tête, ils présentent l'inconvénient d'être facilement disjoignables, notamment dans des milieux aquatiques où l'environnement est suffisamment agressif pour arracher le corps à la tête de tels leurres.

Le but de la présente invention est de pallier ces inconvénients et de proposer un leurre dont les éléments le constituant soient parfaitement maintenus entre eux, même dans un milieu aquatique, tout en assurant la facilité entre eux, même dans un milieu aquatique, tout en assurant la facilité de montage de ces différents éléments.

L'invention propose un leurre de pêche suivant la revendication 1 comportant :
- une tête rigide présentant une face arrière ,
- un corps en matière souple s'étendant longitudinalement entre une extrémité avant et une extrémité arrière, l'extrémité avant étant adaptée à venir en contact avec la face arrière, de sorte à former un leurre présentant la forme d'un appât pour poisson,
- un hameçon s'étendant entre une première extrémité comportant un billet et une deuxième extrémité comportant une pointe,
- une tige d'attache comportant une première extrémité solidaire de la tête et une deuxième extrémité libre de sorte à pouvoir enfiler l'oeillet de l'hameçon sur la tige d'attache, la tige d'attache comportant également entre la première extrémité et la deuxième extrémité de la tige d'attache, une partie de fixation autour de laquelle l'oeillet de l'hameçon est maintenu; la tige d'attache ayant une forme de S et comportant une partie de maintien s'étendant sensiblement dans un plan vertical passant par l'axe longitudinal, la partie de maintien étant adaptée à exercer une force de compression de la partie du corps disposée entre la face arrière de la tête et la tige d'attache , de sorte à maintenir le corps contre la face arrière de la tête,
et en ce que le corps comprend des évidements adaptés à recevoir l'hameçon et la tige d'attache.

Grâce à ces dispositions la tige d'attache selon l'invention assure un meilleur maintien du corps sur la tête et garantit une bonne résistance du leurre dans un cours d'eau ou en mer. De cette manière, la partie de maintien permet de maintenir le corps serré. En effet, le corps est maintenu à la tête par compression de la partie de maintien de la tige d'attache dans un évidement associé du corps. De plus, le montage et la manipulation du leurre par l'utilisateur sont facilités par le fait d'avoir des évidements prévus dans le corps pour recevoir l'hameçon et la tige d'attache. De cette façon, le corps peut être réutilisé plusieurs fois sans être détérioré. Aussi, le leurre ne nécessite pas de sertissage ou de manipulation à la pince pour emprisonner l'oeillet de l'hameçon à la partie de maintien et l'hameçon se trouve également montable et démontable sans l'intervention d'outils.

Selon l'invention, la tige d'attache a une forme de S. Ainsi, la forme en S apporte une facilité de montage par la forme recourbée supérieure et assure le maintien de l'oeillet de l'hameçon par la forme recourbée inférieure. De plus, la forme recourbée inférieure empêche l'hameçon de coulisser vers le haut.

Selon une variante, la face arrière comprend un premier rebord adapté à venir en contact avec un deuxième bord du corps. De cette façon, l'association du rebord de la tête et du bord du corps forme un moyen de guidage de la tête en assurant le contact du corps et de la tête.

Egalement, selon une autre variante, la partie de fixation adaptée à recevoir l'oeillet de l'hameçon est fixée directement et solidairement à la tête. Ainsi, la partie de fixation et le corps forment une seule pièce qui permet de faciliter la manipulation et le montage du leurre.

Selon une autre variante, l'extrémité libre de la tige d'attache est recourbée de sorte à éviter l'enfoncement de l'extrémité libre dans le corps. Ainsi recourbée, l'extrémité libre permet de ne pas détériorer le corps de sorte que le corps peut être réutilisé. De plus, l'extrémité libre coopère avec l'évidement du corps de sorte à améliorer le blocage en rotation du corps par rapport à la tête.

Selon une autre variante, la face arrière de la tête présente une zone inférieure sur laquelle la partie de fixation est fixée, une zone centrale vis-à-vis de laquelle la partie de maintien est disposée et une zone supérieure.

Cette disposition permet de mettre en évidence la caractéristique du décalage entre la zone inférieure d'attache de l'hameçon et la zone supérieure d'attache de la ligne de pêche. Le fait d'avoir l'attache de l'hameçon décalée par rapport à l'attache de la ligne favorise le maintien du poisson qui est maintenu par le leurre. Lorsque le poisson mord au leurre, la zone supérieure est la zone avec le plus de tensions et le fait d'avoir la partie de fixation de la tige d'attache reliée à la zone inférieure permet d'avoir une résultante des forces exercées par le poisson sur le leurre moins importante.

Selon l'invention, il peut être prévu que la pointe de l'hameçon est disposée à l'extérieur du corps et affleure le corps. En effet, la position de la pointe de l'hameçon permet d'éviter l'accrochage des algues ou autres éléments aquatiques. De plus, la manipulation du leurre est sans danger pour l'utilisateur.

Selon l'invention, l'extrémité arrière est aplatie selon un plan sensiblement incliné passant par une première droite sensiblement inclinée s'étendant dans le plan de la tige d'attache et incliné par rapport à la verticale et une deuxième droite selon la direction transversale et horizontale par rapport à l'axe longitudinal du leurre. En effet, à l'aide des mouvements de l'opérateur lors de la remonté de la ligne et de cette extrémité du corps, le leurre agit comme un vrai poisson du fait que l'extrémité arrière donne au leurre un mouvement oscillatoire.

La présente invention sera mieux comprise à la lecture de la description détaillée qui suit, réalisée sur la base des dessins annexés dans lesquels :
- la figure 1 illustre une vue latérale du leurre selon l'invention,
- la figure 2 illustre une vue similaire à celle de la figure 1, faisant apparaître les éléments situés à l'intérieur du corps,
- la figure 3 représente une vue éclatée du leurre selon l'invention,
- les figures 4a à 4d sont des vues en coupe selon les plans A-A à D-D,
- la figure 5 représente une vue de dessus du leurre selon l'invention.

Le leurre 10 de pêche selon l'invention est destiné à être utilisé pour la pêche à la ligne. Le leurre 10 est accroché au bout d'une ligne d'une canne à pêche ou autre appareillage de pêche.

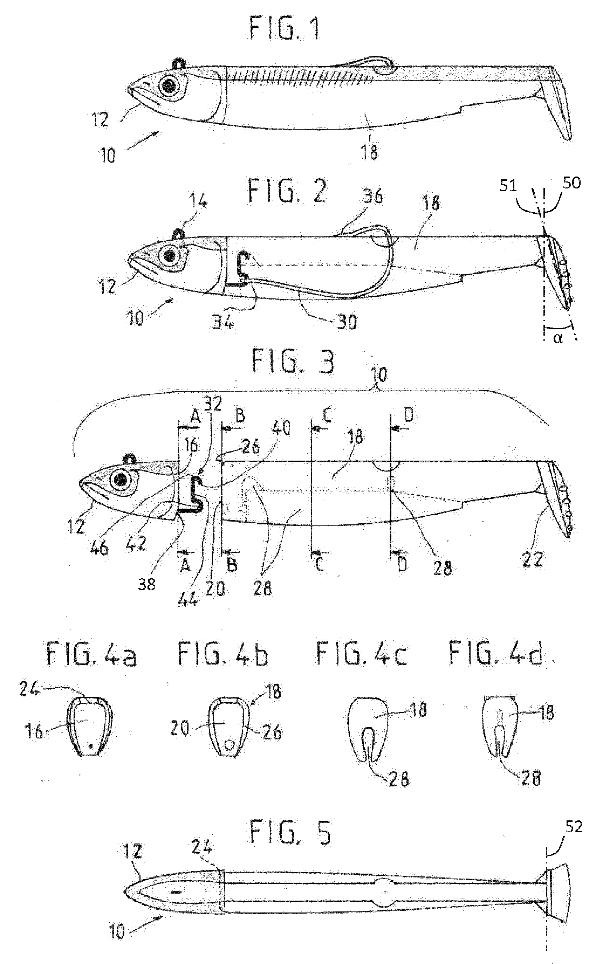

Le leurre 10 selon l'invention est visible sur les figures 1 à 5 annexées. Il ressemble à un réel poisson de petite taille pour former un appât auprès d'espèces de plus grandes tailles que le pêcheur souhaité attraper.

Le leurre 10 comporte une tête 12 en métal, par exemple en plomb ou en plastique rigide, qui est attachée à la ligne de pêche par l'intermédiaire d'un anneau 14 disposé sur le dessus de la tête 12. Le poids de la tête 12 permet d'immerger complètement le leurre 10 dans l'eau. La tête 12 présente une forme sensiblement conique, sur laquelle sont dessinés des organes, tels que des yeux, une bouche, des narines, de sorte à obtenir une proche ressemblance avec un véritable petit poisson. Tel qu'illustré sur les figures 1 à 5, la tête 12 est disposée de sorte que l'axe principal du cône soit sensiblement horizontal et la base du cône forme une face arrière 16 adaptée à venir en contact avec un corps 18.

Le corps 18 est réalisé en matière plastique souple ou autre matière souple. Il présente la forme d'un corps 18 de poisson avec une nageoire caudale et une partie ventrale. De préférence, la matière plastique est ornée de motifs évoquant les écailles d'un poisson. Ces motifs peuvent être par exemple des paillettes présentant des reflets scintillants, proches de ceux des écailles d'un poisson.

Le corps 18 s'étend selon une direction longitudinale entre une première extrémité avant 20 et une extrémité arrière 22.

L'extrémité arrière 22 est aplatie selon un plan sensiblement incliné passant par une première droite 51 sensiblement inclinée s'étendant dans le plan de la tige d'attache 32 et incliné par rapport à la verticale 50 selon l'angle α entre 10 et 30° et une deuxième droite 52 selon la direction transversale et horizontale par rapport à l'axe longitudinal du leurre. Lors de la remontée de la ligne et de cette extrémité du corps, le leurre a un mouvement oscillatoire qui simule les mouvements d'un poisson. De plus, suivant l'invention, un renfort entre l'extrémité arrière 22 et le corps 18 du leurre 10 permet d'éviter un déchirement à cet endroit et renforce le mouvement vibratoire du leurre.

Lorsque le leurre 10 est en position montée, le corps 18 et la tête 12 sont assemblés, de sorte que l'extrémité avant 20 du corps 18 soit au contact de la face arrière 16 de la tête 12, et le corps 18 qui prolonge la tête 12 s'étende selon la direction longitudinale horizontale orientée sensiblement perpendiculaire à la face arrière 16 de la tête 12.

De préférence, la face arrière 16 de la tête 12 comporte un rebord 24 et l'extrémité avant 20 du corps 18 comporte un bord 26, le rebord 24 et le bord 26 présentant des formes complémentaires et coopérant entre eux de sorte à faciliter et à guider le positionnement correct du corps 18 sur la tête 12.

Le corps 18 comporte des évidements 28 illustrés en pointillé sur la figure 3, assurant le guidage et le bon positionnement des différents éléments, tel qu'un hameçon 30 ou un moyen d'attache qui seront expliqués plus en détail dans la suite de la description. Ces évidements 28 permettent d'éviter tout point de rupture lors de l'insertion de ces éléments, qui pourrait par la suite diminuer la résistance et créer des zones de faiblesse à partir desquelles le corps 18 pourrait se déchirer lorsqu'il est soumis aux contraintes d'un milieu aquatique.

Le leurre 10 selon l'invention comporte en outre un hameçon 30 s'étendant entre une première extrémité comportant un oeillet 34 et une deuxième extrémité comportant une pointe 36. La figure 2 illustre le leurre 10 en position montée, avec l'hameçon 30 disposé à l'intérieur du corps 18. Dans cette position, la pointe 36 de l'hameçon 30 affleure le corps 18 du leurre 10, c'est-à-dire est disposé au ras du corps 18, de manière à éviter l'accrochage des algues ou autres éléments aquatiques.

Le leurre 10 comporte en outre un moyen d'attache 32, formé par une tige permettant de relier la tête 12, le corps 18 et l'hameçon 30, et de maintenir le leurre 10 en position montée. A cet effet, la tige d'attache 32 comporte une première extrémité 38 fixée à la face arrière 16 de la tête 12, de manière solidaire, et une extrémité libre 40 à partir de laquelle l'oeillet 34 et le corps 18 sont enfilés sur la tige.

La tige d'attache 32 présente une forme sensiblement en S, dont la partie courbée inférieure, appelée partie de fixation 42, est fixée solidairement à la tête 12 et reçoit l'oeillet 34 de l'hameçon 30. De cette façon, l'hameçon 30 évite de sortir de son logement et assure en outre une mobilité entre la tête 12 et le corps 18.

La partie supérieure de la tige d'attache 32, appelée partie de maintien 44, est adaptée à exercer une force de compression de la partie du corps 18 disposée entre la face arrière 16 de la tête 12 et ladite partie de maintien 44.

A cet effet la partie de maintien 44 s'étend dans un plan sensiblement parallèle au plan défini par la face arrière 16 de la tête 12. Tel que visible sur les figures 2 et 3, la partie maintien s'étend en outre selon une direction verticale perpendiculaire à la direction longitudinale.

Afin d'améliorer le maintien du corps 18 contre la tête 12, la partie de maintien 44 s'étend sensiblement parallèlement à une zone centrale de la face arrière 16 de la tête 12, et la partie de fixation 42 est solidaire de la face arrière 16 dans une zone inférieure de celle-ci. Grâce à ces dispositions, les forces de maintien sont exercées sur une zone centrale de l'extrémité avant 20 du corps 18, ce qui assure une meilleure stabilité du leurre 10 en position montée.

La tige d'attache 32 comporte en outre, à son extrémité libre 40 une partie recourbée 46, permettant une insertion plus facile dans le corps 18, sans enfoncer celle-ci dans la matière souple du corps 18. De cette façon, la partie recourbée 46 évite tout déchirement et ne détériore pas le corps 18 de sorte que le corps 18 peut être réutilisé ou remonté. De plus, l'extrémité libre 40 coopère avec l'évidement 28 du corps de sorte à améliorer le maintien en bloquant en rotation le corps 18 par rapport à la tête 12.

De plus la forme recourbée 46, orientée vers le bas, permet d'éviter le retrait de l'hameçon 30 lorsque le leurre 10 est en cours d'utilisation, et notamment lorsqu'il est soumis à des contraintes importantes, lorsqu'un poisson tire sur la ligne.

Le leurre 10 selon l'invention est constitué de différents éléments, qui peuvent être facilement assemblés entre eux. Le leurre 10 présente ainsi l'avantage de pouvoir être vendu en kit, l'utilisateur choisissant les formes esthétiques du corps 18 et de la tête 12 en fonction du type de pêche qu'il pratique.

De plus, l'hameçon 30 est mobile par rapport au corps 18, puisqu'il n'est pas directement fixé sur ce dernier. Ainsi, lorsqu'un poisson saisit le leurre 10, il exerce avec sa bouche un mouvement tendant à soulever l'hameçon 30 vers le haut et donc à éloigner la pointe 36 du corps 18. L'hameçon 30 est ainsi rendu accessible et le poisson est alors pris au piège.

L'invention n'est nullement limitée aux modes de réalisation décrits et illustrés qui n'ont été donnés qu'à titre d'exemple.

## Revendications

1. Leurre de pêche ressemblant à un réel poisson comportant :
- une tête (12) rigide présentant une face arrière (16),
- un corps (18) en matière souple s'étendant longitudinalement entre une extrémité avant (20) et une extrémité arrière (22), l'extrémité avant (20) étant adaptée à venir en contact avec la face arrière (16), de sorte à former un leurre (10) présentant la forme d'un appât pour poisson,
- un hameçon (30) s'étendant entre une première extrémité comportant un oeillet (34) et une deuxième extrémité comportant une pointe (36),
- une tige d'attache (32) comportant une première extrémité solidaire de la tête (12) et une deuxième extrémité libre de sorte à pouvoir enfiler l'oeillet (34) de l'hameçon (30) sur la tige d'attache (32), la tige d'attache (32) comportant également entre la première extrémité et la deuxième extrémité de la tige d'attache, une partie de fixation (42) autour de laquelle l'oeillet (34) de l'hameçon (30) est maintenu ;
le leurre étant **caractérisé en ce que**
- la tige d'attache (32) a une forme de S et comporte une partie de maintien (44) s'étendant sensiblement dans un plan vertical passant par l'axe longitudinal, la partie de maintien (44) étant adaptée à exercer une force de compression de la partie du corps (18) disposée entre la face arrière (16) de la tête (12) et la tige d'attache (32), de sorte à maintenir le corps (18) contre la face arrière (16) de la tête (12),
- le corps (18) comprend des évidements (28) adaptés à recevoir l'hameçon (30) et la tige d'attache (32) ;
- l'extrémité arrière (22) est aplatie selon un plan sensiblement incliné passant par une première droite (51) sensiblement inclinée s'étendant dans le plan de la tige d'attache (32) et incliné par rapport à la verticale (50) et une deuxième droite (52) selon la direction transversale et horizontale par rapport à l'axe longitudinal du leurre ;
- un renfort est positionné entre l'extrémité arrière (22) et le corps (18).

2. Leurre de pêche selon la revendication 1, dans lequel la face arrière (16) comprend un premier rebord (24) adapté à venir en contact avec un deuxième bord (26) du corps (18).

3. Leurre de pêche selon l'une des revendications précédentes, dans lequel la partie de fixation (42) adaptée à recevoir l'oeillet (34) de l'hameçon (30) est fixée directement et solidairement à la tête (12).

4. Leurre de pêche selon l'une des revendications précédentes, dans lequel l'extrémité libre (40) de la tige d'attache (32) est recourbée de sorte à éviter l'enfoncement de l'extrémité libre (40) dans le corps (18).

5. Leurre de pêche selon l'une des revendications précédentes, dans lequel la face arrière (16) de la tête (12) présente une zone inférieure sur laquelle la partie de fixation (42) est fixée, une zone centrale vis-à-vis de laquelle la partie de maintien (44) est disposée et une zone supérieure.

6. Leurre de pêche selon l'une des revendications précédentes, dans lequel la pointe (36) de l'hameçon (30) est disposée à l'extérieur du corps (18) et affleure le corps.

## Patentansprüche

1. Angelköder, der einem echten Fisch ähnlich ist, umfassend:
- einen starren Kopf (12), der eine Hinterseite (16) aufweist,
- einen Körper (18) aus weichem Material, der sich in Längsrichtung zwischen einem Vorderende (20) und einem Hinterende (22) erstreckt, wobei das Vorderende (20) geeignet ist, mit der Hinterseite (16) derart in Kontakt zu kommen, dass ein Köder (10) gebildet wird, der die Form eines Fischköders aufweist,
- einen Haken (30), der sich zwischen einem ersten Ende, das eine Öse (34) aufweist, und einem zweiten Ende, das eine Spitze (36) aufweist, erstreckt,
- eine Befestigungsstange (32), die ein erstes Ende, das mit dem Kopf (12) fest verbunden ist, und ein zweite Ende aufweist, das derart frei ist, dass die Öse (34) des Hakens (30) in die Befestigungsstange (32) eingeführt werden kann, wobei die Befestigungsstange (32) auch zwischen dem ersten Ende und dem zweiten Ende der Befestigungsstange einen Befestigungsteil (42) aufweist, um den die Öse (34) des Hakens (30) gehalten ist;
wobei der Köder **dadurch gekennzeichnet ist, dass**
- die Befestigungsstange (32) eine S-Form hat und einen Halteteil (44) aufweist, der sich im Wesentlichen in einer vertikalen Ebene erstreckt, die durch die Längsachse verläuft, wobei der Halteteil (44) geeignet ist, eine Druckkraft des Teils des Körpers (18), der zwischen der Hinterseite (16) des Kopfes (12) und der Befestigungsstange (32) angeordnet ist, derart auszuüben, dass der Körper (18) gegen die Rückseite (16) des Kopfes (12) gehalten wird,
- der Körper (18) Ausnehmungen (28) aufweist, die geeignet sind, den Haken (30) und die Befestigungsstange (32) aufzunehmen,
- das Hinterende (22) nach einer im Wesentlichen geneigten Ebene abgeflacht ist, die durch eine erste Gerade (51) verläuft, die im Wesentlichen geneigt ist, die sich in der Ebene der Befestigungsstange (32) erstreckt, und in Bezug auf die Vertikale (50) und eine zweite Gerade (52) nach der querverlaufenden und horizontalen Richtung gegenüber der Längsachse des Köders geneigt ist;
- eine Verstärkung zwischen dem Hinterende (22) und dem Körper (18) angeordnet ist.

2. Angelköder nach Anspruch 1, wobei die Rückseite (16) eine erste Kante (24) aufweist, die geeignet ist, mit einem zweiten Rand (26) des Körpers (18) in Kontakt zu kommen.

3. Angelköder nach einem der vorhergehenden Ansprüche, wobei der Befestigungsteil (42), der geeignet ist, die Öse (34) des Hakens (30) aufzunehmen, direkt und fest verbunden an dem Kopf (12) befestigt ist.

4. Angelköder nach einem der vorhergehenden Ansprüche, wobei das freie Ende (40) der Befestigungsstange (32) derart gekrümmt ist, dass das Einsinken des freien Endes (40) in den Körper (18) verhindert wird.

5. Angelköder nach einem der vorhergehenden Ansprüche, wobei die Rückseite (16) des Kopfes (12) einen unteren Bereich, an dem der Befestigungsteil (42) befestigt ist, einen mittleren Bereich, gegenüber von dem der Halteteil (44) angeordnet ist, und einen oberen Bereich aufweist.

6. Angelköder nach einem der vorhergehenden Ansprüche, wobei die Spitze (36) des Hakens (30) auf der Außenseite des Körpers (18) angeordnet ist und an dem Körper anliegt.

## Claims

1. Angling lure resembling a real fish, including:
- a rigid head (12) having a rear face (16),
- a flexible material body (18) extending longitudinally between a front end (20) and a rear end (22), the front end (20) being adapted to come into contact with the rear face (16), so as to form a lure (10) having the shape of bait for fish,
- a hook (30) extending between a first end including an eyelet (34) and a second end including a point (36),
- an attachment rod (32) including a first end fastened to the head (12) and a free second end so that the eyelet (34) of the hook (30) can be threaded onto the attachment rod (32), the attachment rod (32) also including between the first end and the second end of the attachment rod a fixing portion (42) around which the eyelet (34) of the hook (30) is retained;
the lure being **characterized in that**
- the attachment rod (32) is S-shaped and comprises a retaining portion (44) lying substantially in a vertical plane passing through the longitudinal axis, the retaining portion (44) being adapted to exert a force compressing the portion of the body (18) disposed between the rear face (16) of the head (12) and the attachment rod (32) so as to retain the body (18) against the rear face (16) of the head (12),
- the body (18) comprises openings (28) adapted to receive the hook (30) and the attachment rod (32);
- the rear end (22) is flattened in a substantially inclined plane passing through a substantially inclined first straight line segment (51) lying in the plane of the attachment rod (32) and inclined relative to the vertical (50) and a second straight line segment (52) in the horizontal transverse direction relative to the longitudinal axis of the lure;
- a reinforcement is positioned between the rear end (22) and the body (18).

2. Angling lure according to Claim 1, wherein the rear face (16) comprises a first rim (24) adapted to come into contact with a second edge (26) of the body (18).

3. Angling lure according to either one of the preceding claims, wherein the fixing portion (42) adapted to receive the eyelet (34) of the hook (30) is fixed directly and firmly to the head (12).

4. Angling lure according to any one of the preceding claims, wherein the free end (40) of the attachment rod (32) is curved to prevent the free end (40) digging into the body (18).

5. Angling lure according to any one of the preceding claims, wherein the rear face (16) of the head (12) has a lower area to which the fixing portion (42) is fixed, a central area which the retaining portion (44) faces, and an upper area.

6. Angling lure according to any one of the preceding claims, wherein the point (36) of the hook (30) is disposed externally of the body (18) and is flush with the body.
